# EUROPEAN PATENT SPECIFICATION

(11) **EP 1 214 209 B1**
(45) Date of publication and mention of the grant of the patent: **17.03.2004**
(21) Application number: 00958869.0
(22) Date of filing: 12.09.2000
(51) Int. Cl.: B60G 9/00, B60G 7/00

(54) **VEHICLE SUSPENSIONS**
FAHRZEUGAUFHÄNGUNGEN
SUSPENSIONS POUR VEHICULES

(30) Priority: 14.09.1999 GB 9921541
(43) Date of publication of application: 19.06.2002
(73) Proprietor: Land Rover Group Limited, St. Helier, Jersey JE4 9WG (GB)
(72) Inventor: BUCHAN, Eric, George, Stourbridge, West Midlands DY9 0YQ (GB)
(74) Representative: Farrow, Robert Michael
(86) International application number: PCT/GB2000/003486
(87) International publication number: WO 2001/019627

(56) References cited:
- US-A- 3 777 838
- US-A- 4 341 397
- US-A- 4 410 201
- US-A- 5 758 898
- US-A- 5 884 925
- PATENT ABSTRACTS OF JAPAN vol. 1996, no. 12, 26 December 1996 (1996-12-26) & JP 08 207536 A (TOYOTA MOTOR CORP), 13 August 1996 (1996-08-13)
- PATENT ABSTRACTS OF JAPAN vol. 018, no. 383 (M-1640), 19 July 1994 (1994-07-19) & JP 06 106934 A (NISSAN MOTOR CO LTD), 19 April 1994 (1994-04-19)
- PATENT ABSTRACTS OF JAPAN vol. 1996, no. 10, 31 October 1996 (1996-10-31) & JP 08 156557 A (MITSUBISHI MOTORS CORP), 18 June 1996 (1996-06-18)

## Description

The present invention relates to beam axle vehicle suspensions, and in particular to mechanisms for location of such axles in the longitudinal direction of the vehicle.

Rear beam axles are generally longitudinally located either by 'C spanners' which are longitudinally extending links, one on either side of the vehicle, with their rear ends connected to the axle at two positions which are spaced apart in the longitudinal direction of the vehicle, or by four links each of which is connected to the body at one end and to the axle at the other, the connection points to the axle being spaced apart vertically so as to control rotation of the axle unit as a whole about an axis transverse to the vehicle. Four link systems generally provide less resistance to vehicle roll and axle cross-articulation, but can cause packaging problems.

US-A-5 758 898 shows a suspension for connecting a beam axle to a sprung part of a vehicle according to the preamble of claim 1. However, the arrangement shown is an elaboration of a four link system with its attendant packaging problems.

According to the invention there is provided a suspension according claim 1.

The use of four links can help to reduce roll and articulation stiffness, as in a conventional four-link type beam suspension, but the connection of the secondary links to the primary links simplifies mounting to the vehicle body and reduces the overall space required by the system.

Preferably the suspension further comprises lateral location means for the axle, which may comprise a Panhard rod or a Watts linkage

Preferred embodiments of the present invention will now be described by way of example only with reference to the accompanying drawings in which:

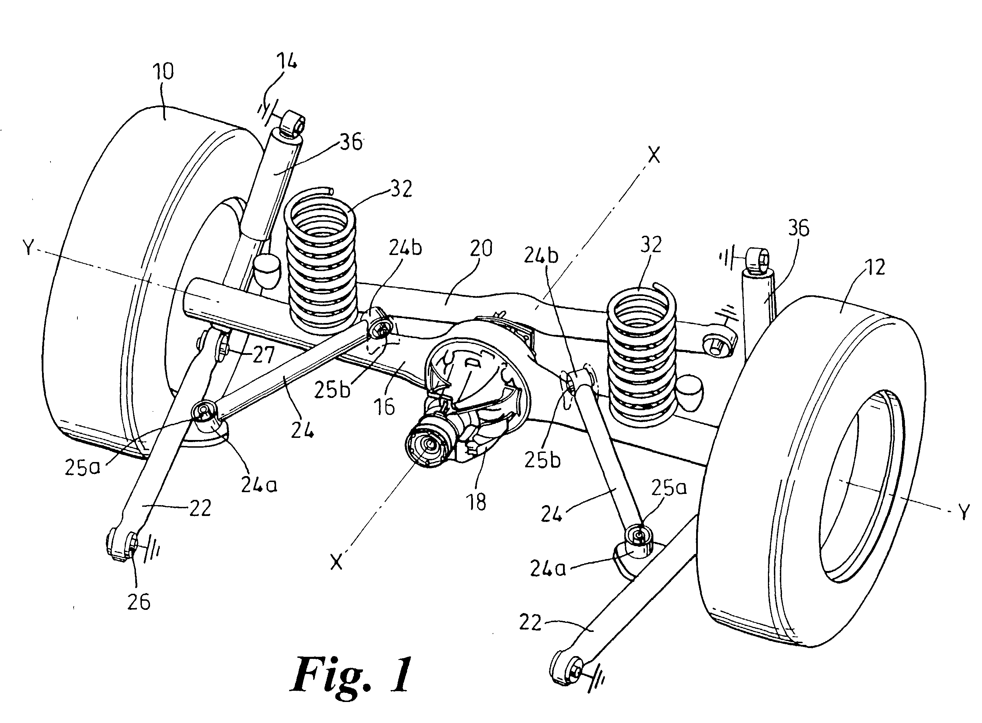

Figure 1 is a front perspective view of a suspension according to the invention;

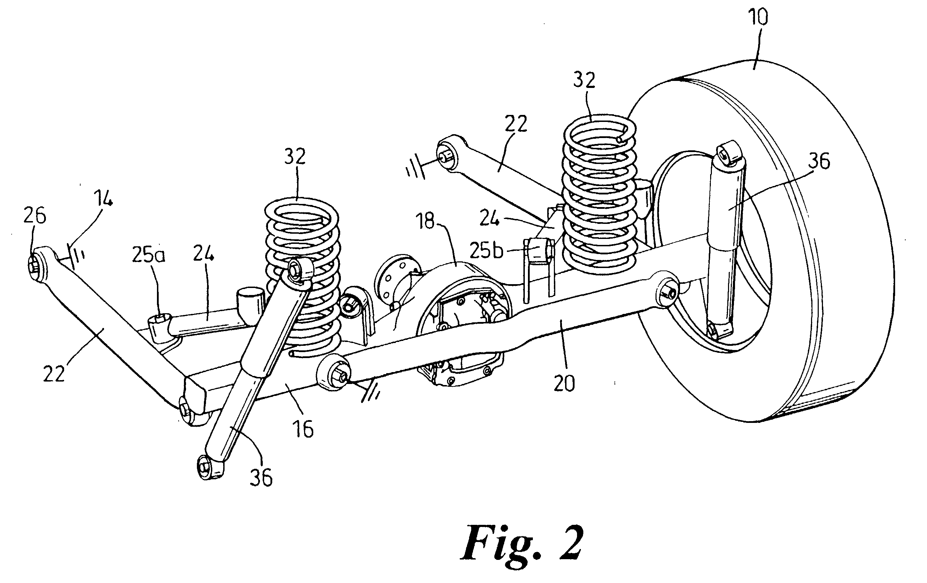

Figure 2 is a rear perspective view of the suspension of Figure 1;

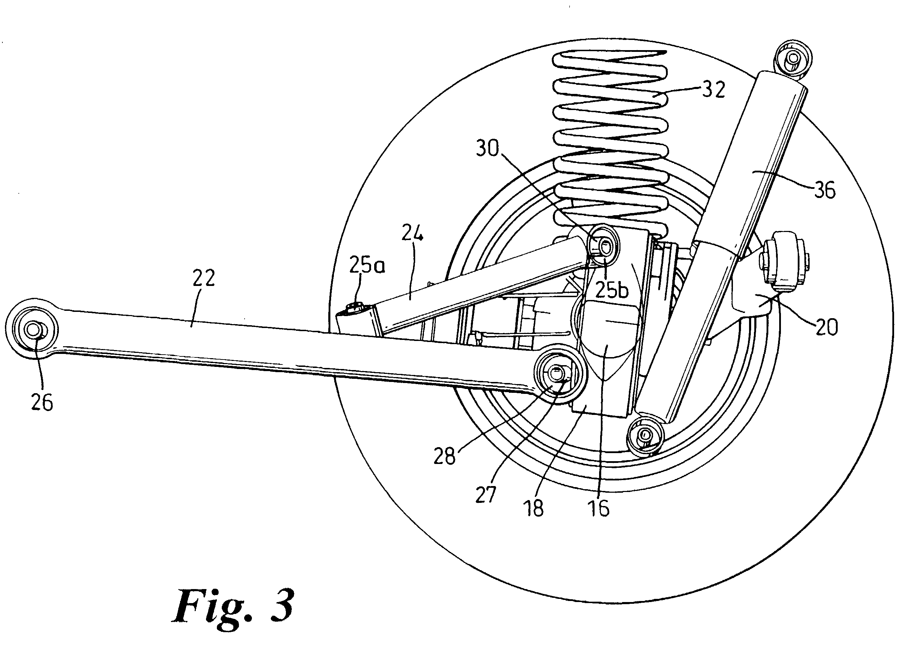

Figure 3 is a side view of the suspension of Figure 1; and

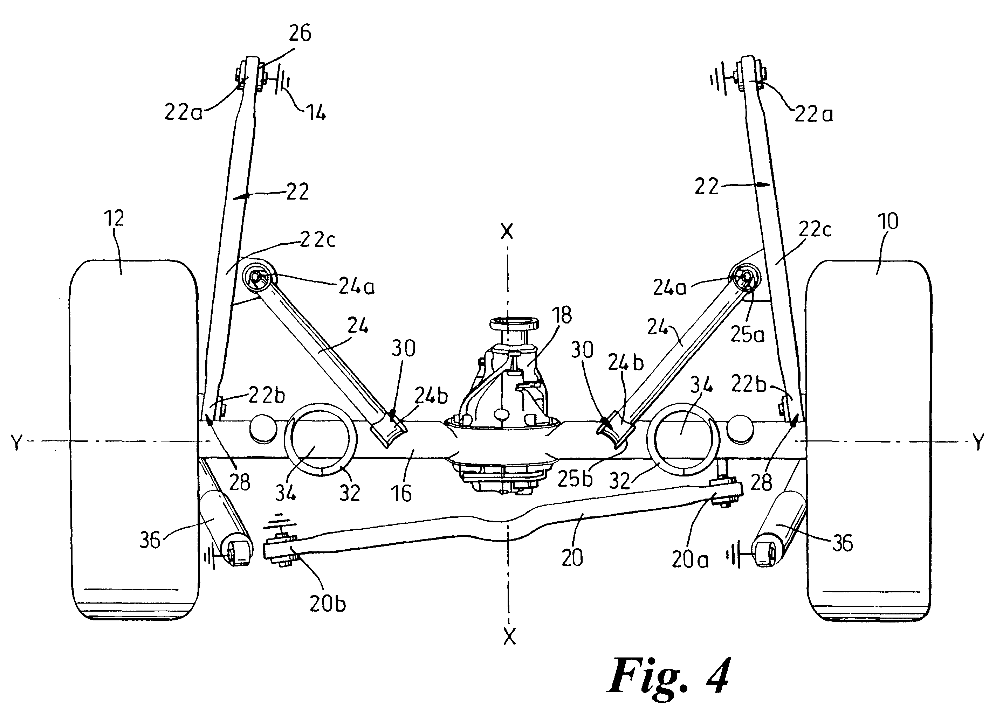

Figure 4 is a plan view of the suspension of Figure 1.

A vehicle rear suspension for connecting two rear vehicle wheels 10, 12 to a sprung part of the vehicle in the form of the vehicle body or chassis 14 includes a beam axle 16 carrying one of the wheels 10, 12 at each end. The beam axle extends transversely of the vehicle in the normal manner and has a differential 18 at its centre.

Lateral location of the axle 16 relative to the body 14 is provided by a Panhard rod 20 extending laterally and having one end 20a pivotably connected to the axle 16 near one of its ends, and the other end 20b pivotably connected to the body 14.

Longitudinal location of the axle is provided by two pairs of rigid, non-extendible links, one pair on each side of the vehicle. Each pair comprises a primary link 22 and a secondary link 24. Each primary link 22 is approximately half as long as the axle 16 and extends substantially horizontally and longitudinally of the vehicle, having its front end 22a pivotably connected by an elastomeric bush 26 to the body 14 and its rear end 22b connected by an elastomeric bush 27 to the under side of the axle 16 at a primary link connection point 28 close to the end of the axle 16. Each secondary link 24 is connected by an elastomeric bush 25a at one end 24a to its respective primary link 22 at approximately the centre 22c thereof, and at the other end 24b by an elastomeric bush 25b to the axle at a secondary link connection point 30. The secondary link connection points 30 are on the upper side of the axle 16 significantly inboard of the primary link connection points 28, each being spaced from the respective end of the axle 16 by a distance approximately equal to a third of the length of the axle 16. The secondary links 24 therefore extend obliquely to the axle 16, their front ends 24a being substantially outboard of their rear ends 24b. The vertical spacing between the primary and secondary link connection points 28, 30 enable the links 22, 24 to control the rotation of the axle 16 and differential 18 about an axis Y - Y transverse to the vehicle.

Two coil springs 32, one on each side of the vehicle, are provided to provide the springing between the axle 16 and the body. Each spring 32 has its lower end connected to the axle at a spring connection point 34 which is between the primary and secondary link connection points 28 30 on the respective side. Dampers 36 are also provided acting between the ends of the axle 16 and the body.

During vehicle roll or cross articulation, when the axle 16 rotates about a longitudinal axis X - X passing through its centre, both ends of the secondary links 24 move vertically by about half the distance that the wheels 10, 12 move. This is because their front ends 24a are very approximately half way along the primary links 22, and their rear ends 24b are very approximately half way between the axis X-X and the wheels. This results in a relatively low amount of flexing of the bushes at the ends of the secondary links, which therefore provide a relatively low amount of resistance to such axle movements.

## Claims

1. A suspension for connecting a beam axle (16) to a sprung part (14) of a vehicle, the suspension comprising a pair of primary location links (22) each arranged to have, in use, one end (22a) connected to said sprung part and the other end (22b) connected at a primary link connection point (28) to the axle near a respective end thereof so as to locate the axle in the longitudinal direction of the vehicle, and a pair of non-extendible secondary links (24) each having one end (24a) connected by means of a resilient bush (25a) to the respective primary link between its two ends and the other end (24b) connected by means of a resilient bush (25b) to the axle at a secondary link connection point (30), the secondary link connection points being significantly inboard of the respective primary link connection points, **characterised in that** the secondary link connection points (30) are vertically spaced from the primary link connection points (28) so as to control rotation of the axle (16) about an axis transverse to the vehicle.

2. A suspension according to claim 1 wherein the primary link connection points (28) are below the secondary link connection points (30).

3. A suspension according to claim 1 or claim 2 and further comprising two coil springs (32) each acting between said sprung part (14) and the axle (16) at a spring connection point (34) outboard of a respective one of the secondary link connection points (30).

4. A suspension according to claim 3 wherein the spring connection points (34) are inboard of the primary link connection points (28).

5. A suspension according to any foregoing claim wherein the secondary links (24) are connected to the primary links (22) at a point approximately half way along the primary links.

6. A suspension according to any foregoing claim and further comprising lateral location means (20) for the axle (16).

7. A suspension according to claim 6 wherein the lateral location means comprises a Panhard rod (20).

## Patentansprüche

1. Aufhängung zur Verbindung einer Starrachse (16) mit einem gefederten Teil (14) eines Fahrzeugs, wobei die Aufhängung ein Paar Primäranordnungsstreben (22), von denen jede so vorgesehen ist, daß im Gebrauch ein Ende (22a) davon mit dem gefederten Teil und das andere Ende (22b) an einem Primärstrebenverbindungspunkt (28) mit der Achse in der Nähe eines jeweiligen Endes davon verbunden ist, um die Achse in der Längsrichtung des Fahrzeugs anzuordnen, sowie ein Paar nicht ausdehnbarer Sekundärstreben (24) umfaßt, von denen jeweils ein Ende (24a) mittels einer elastisch nachgiebigen Buchse (25a) mit der jeweiligen Primärstrebe zwischen ihren beiden Enden und das andere Ende (24b) mittels einer elastisch nachgiebigen Buchse (25b) an einem Sekundärstrebenverbindungspunkt (30) mit der Achse verbunden ist, wobei die Sekundärstrebenverbindungspunkte im Verhältnis zu den jeweiligen Primärstrebenverbindungspunkten deutlich innen liegen, **dadurch gekennzeichnet, daß** die Sekundärstrebenverbindungspunkte (30) von den Primärstrebenverbindungspunkten (28) vertikal beabstandet sind, um die Drehung der Achse (16) um eine Achse quer zum Fahrzeug zu steuern.

2. Aufhängung nach Anspruch 1, bei der die Primärstrebenverbindungspunkte (28) unter den Sekundärstrebenverbindungspunkten (30) liegen.

3. Aufhängung nach Anspruch 1 oder Anspruch 2, wobei die Aufhängung weiterhin zwei Schraubenfedern (32) umfaßt, die jeweils zwischen dem gefederten Teil (14) und der Achse (16) an einem Federverbindungspunkt (34) wirken, der im Verhältnis zu einem jeweiligen der Sekundärstrebenverbindungspunkte (30) außen liegt.

4. Aufhängung nach Anspruch 3, bei der die Federverbindungspunkte (34) im Verhältnis zu den Primärstrebenverbindungspunkten (28) innen liegen.

5. Aufhängung nach einem der vorstehend aufgeführten Ansprüche, bei der die Sekundärstreben (24) an einem Punkt, der etwa auf halbem Weg entlang den Primärstreben liegt, mit den Primärstreben (22) verbunden sind.

6. Aufhängung nach einem der vorstehend aufgeführten Ansprüche, wobei die Aufhängung weiterhin ein seitliches Anordnungsmittel (20) für die Achse (16) umfaßt.

7. Aufhängung nach Anspruch 6, bei der das seitliche Anordnungsmittel einen Panhardstab (20) umfaßt.

## Revendications

1. Suspension pour connecter un essieu-poutre (16) à une partie suspendue (14) d'un véhicule, la suspension comprenant une paire de biellettes primaires (22) chaque biellette étant agencée pour avoir, lors de l'utilisation, une extrémité (22a) connectée à ladite partie suspendue et l'autre extrémité (22b) connectée à un point de connexion de biellette primaire (28) sur l'essieu près d'une extrémité respective de celui-ci de manière à positionner l'essieu dans la direction longitudinale du véhicule, et une paire de biellettes secondaires non extensible (24) ayant chacune une extrémité (24a) connectée au moyen d'une bague élastique (25a) à la biellette primaire respective entre ses deux extrémités et l'autre extrémité (24b) connectée au moyen d'une bague élastique (25b) à l'essieu à un point de connexion de biellette secondaire (30), les points de connexion de biellette secondaire étant significativement à l'intérieur des points de connexion de biellette primaire respectifs, **caractérisée en ce que** les points de connexion de biellette secondaire (30) sont espacés verticalement des points de connexion de biellette primaire (28) de manière à contrôler la rotation de l'essieu (16) autour d'un axe transversal par rapport au véhicule.

2. Suspension selon la revendication 1, dans laquelle les points de connexion de biellette primaire (28) sont au-dessous des points de connexion de biellette secondaire (30).

3. Suspension selon la revendication 1 ou la revendication 2 et comprenant en outre deux ressorts hélicoïdaux (32) agissant chacun entre ladite partie suspendue (14) et l'essieu (16) à un point de connexion de ressort (34) extérieur par rapport à un des points de connexion de biellette secondaire respectif (30).

4. Suspension selon la revendication 3, dans laquelle les points de connexion de ressort (34) sont à l'intérieur par rapport aux points de connexion de biellette primaire (28).

5. Suspension selon l'une quelconque des revendications précédentes, dans laquelle les biellettes secondaires (24) sont connectées aux biellettes primaires (22) à un point approximativement à mi-chemin le long des biellettes primaires.

6. Suspension selon l'une quelconque des revendications précédentes et comprenant en outre un moyen de positionnement latéral (20) pour l'essieu (16).

7. Suspension selon la .revendication 6 dans laquelle le moyen de positionnement latéral comprend une barre Panhard (20).
